(19) Europäisches Patentamt
European Patent Office
Office européen des brevets

(11) **EP 4 357 808 A1**

(12) **EUROPÄISCHE PATENTANMELDUNG**

(43) Veröffentlichungstag:
    24.04.2024  Patentblatt 2024/17

(21) Anmeldenummer: 23202003.2

(22) Anmeldetag: 06.10.2023

(51) Internationale Patentklassifikation (IPC):
    *G01S 7/48* (2006.01)    *G01S 17/42* (2006.01)
    *G01S 17/66* (2006.01)    *G01S 17/89* (2020.01)
    *G01S 17/931* (2020.01)

(52) Gemeinsame Patentklassifikation (CPC):
    **G01S 7/4802; G01S 17/42; G01S 17/66;
    G01S 17/89; G01S 17/931**

(84) Benannte Vertragsstaaten:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Benannte Erstreckungsstaaten:
    **BA**
    Benannte Validierungsstaaten:
    **KH MA MD TN**

(30) Priorität: **20.10.2022  DE 102022211112**

(71) Anmelder: **Robert Bosch GmbH
    70442 Stuttgart (DE)**

(72) Erfinder:
    • **Scherer, Sebastian
      72074 Tuebingen (DE)**
    • **Biber, Peter
      72119 Ammerbuch (DE)**
    • **Kurz, Gerhard
      76131 Karlsruhe (DE)**

(54) **VERFAHREN ZUM BESTIMMEN VON MARKERN FÜR EINE POSITION UND/ODER ORIENTIERUNG EINES MOBILEN GERÄTS IN EINER UMGEBUNG**

(57)    Die Erfindung betrifft ein Verfahren zum Bestimmen einer Position und/oder Orientierung eines mobilen Geräts (100) in einer Umgebung (150), in der sich das mobile Gerät (100) bewegt oder bewegen soll, umfassend: Bereitstellen einer Menge von Punkten in der Umgebung, die ausgehend von und relativ zu dem mobilen Gerät (100) bestimmt worden sind, wobei den Punkten jeweils eine Intensität, insbesondere eine Lichtintensität zugeordnet ist; und Bestimmen, basierend auf der Menge von Punkten, einer Teilmenge von Punkten, die einem oder mehreren in der Umgebung vorhandenen Markern (160) zuordenbar ist, wobei einem Marker (160) zuzuordnende Punkte jeweils gemäß wenigstens einem Kriterium bestimmt werden, wobei das wenigstens eine Kriterium umfasst, dass einer oder mehrere Punkte mit einer Intensität, die höher als ein erster Schwellwert ist, innerhalb eines ersten vorgegebenen Bereichs liegen, und dass einer oder mehrere Punkte mit einer Intensität, die geringer als ein zweiter Schwellwert ist, innerhalb eines zweiten und/oder dritten vorgegebenen Bereichs liegen, wobei der zweite und/oder dritte vorgegebene Bereich an den ersten vorgegebenen Bereich angrenzen; und wobei die Teilmenge der Punkte, sowie insbesondere der einen oder die mehreren Marker, denen die Punkte der Teilmenge zugeordnet sind, basierend auf dem einen oder den mehreren Punkten mit einer Intensität, die höher als der erste Schwellwert ist, bestimmt werden.

**Fig. 1**

EP 4 357 808 A1

**Beschreibung**

Die vorliegende Erfindung betrifft ein Verfahren zum Bestimmen von Markern für eine Position und/oder Orientierung eines mobilen Geräts, z.B. eines sich teilweise automatisiert bewegenden Fahrzeugs oder eines Roboters, in einer Umgebung, eine Recheneinheit und ein Computerprogramm zu dessen Durchführung sowie ein solches mobiles Gerät.

Hintergrund der Erfindung

Mobile Geräte wie z.B. sich zumindest teilautomatisiert bewegende Fahrzeuge oder Roboter bewegen sich typischerweise entlang eines Bewegungspfades in einer Umgebung wie z.B. einer Wohnung, in einem Garten, in einer Fabrikhalle oder auf der Straße, in der Luft oder im Wasser. Hierzu ist es nötig, dass eine aktuelle Position und/oder Orientierung (auch als Pose bezeichnet) des mobilen Geräts bekannt ist und auch immer wieder neu bestimmt wird. Hierzu kann z.B. auf eine Laserentfernungsmessung (z.B. mit sog. Lidar-Sensoren) zurückgegriffen werden.

Offenbarung der Erfindung

Erfindungsgemäß werden ein Verfahren zum Bestimmen von Markern für eine Position und/oder Orientierung eines mobilen Geräts, eine Recheneinheit und ein Computerprogramm zu dessen Durchführung sowie ein solches mobiles Gerät mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung beschäftigt sich mit dem Bestimmen von Markern, die wiederum für eine (aktuelle) Position und/oder Orientierung (auch als Pose bezeichnet) eines mobilen Geräts in einer Umgebung bzw. deren Bestimmung dienen, also insbesondere der Lokalisierung des mobilen Geräts. Als mobiles Gerät kommt hier z.B. ein sich zumindest teilweise automatisiert bewegendes Fahrzeug, insbesondere ein Personenbeförderungsfahrzeug oder Güterbeförderungsfahrzeug (z.B. Gabelstapler, Flurförderfahrzeug), oder ein Roboter, in Betracht. Dabei wird auf das Prinzip der Entfernungsmessung mittels Laser (Laserentfernungsmessung, z.B. mit sog. Lidar-Sensoren) zurückgegriffen. Einer oder ggf. mehrere solcher Lidar-Sensoren sind hierzu typischerweise an oder in dem mobilen Gerät vorgesehen, womit Entfernungen (Abstände) von Objekten in der Umgebung (relativ) zum mobilen Gerät (bzw. zum Sensor) bestimmt werden können. Typischerweise scannt ein solcher Lidar-Sensor die Umgebung vor dem mobilen Gerät in einem gewissen Winkel, z.B. 90°, 180°, 270° oder auch mehr ab.

Eine eher historische und heutzutage zunehmend als veraltet anzusehende Möglichkeit zur Laserentfernungsmessung und darauf basierenden Lokalisierung (Laserlokalisierung) basiert auf der ausschließlichen Verwendung von sog. Reflektormarkern, die flächendeckend in der Umgebung angebracht werden müssen. Diese Reflektormarker können vom Laserscanner bzw. Lidar-Sensor dadurch erkannt werden, dass auf ihnen gemessene Punkte mit deutlich höherer Intensität reflektiert werden als in der restlichen Umgebung. Laserscanner können die Reflektormarker z.B. auf Wunsch selbst erkennen, d.h. es können z.B. direkt nur Messwerte berücksichtigt werden, die einer gewissen Intensität (z.B. höher als ein bestimmter Schwellwert) entsprechen.

Sind die Reflektormarker einmal angebracht, kann deren Position manuell vermessen und in eine Karte eingetragen werden. Während der Lokalisierung können die Positionen erkannter Reflektormarker ständig mit den (dann genau bekannten) Positionen der Reflektormarker in der Karte verglichen werden. Sofern stets mindestens zwei der kartierten Reflektormarker erkannt werden, kann die Pose (Position und Orientierung) des Laserscanners eindeutig bestimmt werden. Dabei soll insbesondere angenommen werden, dass sich das mobile Gerät sowie der Laserscanner in einer 2D-Ebene bewegen, also lediglich über drei Freiheitsgrade (zwei translatorische und ein rotatorischer Freiheitsgrad) verfügen. Grundsätzlich ist das Prinzip aber z.B. auch in 3D anwendbar.

Die Anbringung und Vermessung von Reflektormarkern sind allerdings in der Regel sehr aufwändig. Die Rechenleistung von Recheneinheiten oder Rechensystemen, selbst bei eingebetteten Computersystemen wie sie z.B. bei mobilen Geräten verwendet werden, ist in letzter Zeit deutlich angestiegen. Dies hat dazu geführt, dass sich in den letzten Jahren die Lokalisierung (Bestimmung von Position und/oder Orientierung) von mobilen Geräten unter Verwendung natürlicher Konturen mit Hilfe des sog. "Scan Matching" durchgesetzt hat. Reflektormarker sind dadurch verdrängt worden.

Beim "Scan Matching" (Angleichen von Scans) wird insbesondere die gesamte vom Laserscanner gemessene bzw. erfasste Punktwolke verwendet; bei einer Punktwolke handelt es sich um eine Menge von Punkten in der Umgebung, die mittels des Laserscanners bzw. Lidar-Sensors bestimmt werden. Dabei kann jedem Punkt ein Abstand zum mobilen Gerät bzw. Laserscanner zugeordnet werden, ebenso eine Orientierung relativ zu einer Referenzorientierung des mobilen Geräts bzw. Laserscanner. Die Punktwolke entspricht üblicherweise einer oder mehreren "Punktlinien" entlang der Kontur der Objekte im Sichtbereich; ggf. können die Punkte aber auch nur näherungsweise auf einer solchen Linie liegen.

Diese Punktwolke allein erlaubt aber noch nicht, eine Position und/oder Orientierung des mobilen Geräts in der Umgebung zu bestimmen. Hierzu wird die Punktwolke bzw. Menge von Punkten mit einer Referenzpunktwolke bzw. Referenzmenge von Punkten verglichen. Es kann dann eine Transformation bestimmt werden, die die Punktwolke (bzw. Menge von Punkten) mit der Referenzpunktwolke (bzw. Referenzmenge von Punkten) am besten zur Deckung bzw. in Übereinstimmung bringt, d.h. beide aneinander angleicht. Diese Transformation entspricht dann einer Position und/oder Orientierung des mobilen Geräts bei Erfassung der Punktwolke relativ zur Referenzpunktwolke bzw. einem Koordinatensystem der Referenzpunktwolke. Wenn es sich bei der Referenzpunktwolke um eine Karte der Umgebung oder zumindest eines Teils davon handelt, so kann die aktuelle Position und/oder Orientierung des mobilen Geräts in der Umgebung bestimmt werden. Die Referenzpunktwolke (bzw. Karte der Umgebung) kann z.B. durch ständiges bzw. wiederholtes Hinzufügen neuer Punktwolken oder Teilen davon erweitert werden.

In diesem Zusammenhang wird auch von SLAM gesprochen. Als SLAM ("Simultaneous Localization and Mapping", in etwa: Simultane Positionsbestimmung und Kartierung) wird ein Verfahren in der Robotik bezeichnet, bei dem ein mobiles Gerät wie ein Roboter gleichzeitig eine Karte seiner Umgebung erstellen und seine räumliche Lage innerhalb dieser Karte schätzen kann oder muss. Es dient damit z.B. dem Erkennen von Hindernissen und unterstützt somit die autonome Navigation.

Um auf diese Weise die Position und/oder Orientierung des mobilen Geräts in der Umgebung hinreichend genau bestimmen zu können, sollte die Umgebung über ausreichend viele charakteristische Konturen verfügen, die sich in entsprechenden Punkten der Punktwolke niederschlagen, um das dem "Scan Matching" zugrundeliegenden Problem in allen drei Freiheitsgraden eindeutig eingrenzen zu können. Wie sich gezeigt hat, gibt es jedoch Fälle, in denen dies nicht der Fall ist.

Es ist insofern möglich, Mengen verschiedener Arten von Punkten zu verwenden, insbesondere solche Punkte, die Reflektormarkern oder anderen Markern entsprechen, sowie andere Punkte, die nicht von solchen Markern, also von sonstigen Konturen in der Umgebung, stammen. Damit können an sich die Vorteile aus beiden Ansätzen kombiniert und die Nachteile beider Verfahren ausgeglichen werden. Dabei kann sich meist, z.B. in mehr als 95% der Umgebungen, auf die Lokalisierung mittels Scan Matching verlassen werden, wo dies ausreichend zuverlässig funktioniert. Falls in der gewünschten Umgebung allerdings problematische Stellen anzutreffen sind, kann der Benutzer z.B. eine gewisse Zahl an Reflektormarkern oder sonstigen Markern anbringen, durch deren Verwendung dann an dieser Stelle das möglicherweise zuvor mehrdeutige Scan Matching Ergebnis eindeutig wird. Solche problematischen Stellen können beispielsweise strukturarme Gänge, Bereiche mit unebenem Boden oder Umgebungen mit sehr vielen dynamischen Objekten sein.

Der Vorteil im Vergleich zur Lokalisierung ohne Marker bzw. Reflektormarker ist eine deutlich verbesserte Zuverlässigkeit des Lokalisierungsergebnisses an problematischen Stellen. Der Vorteil im Vergleich zu klassischen reinen reflektorbasierten Lokalisierung ist der deutlich geringere Aufwand bei der Anbringung von Markern. Anstatt vieler Marker auf der ganzen Fläche müssen nur wenige Marker an kritischen Stellen angebracht werden.

Wie sich nun herausgestellt hat, ist aber selbst dann die zuverlässige bzw. robuste Erkennung er Marker bzw. Reflektormarker mitunter nicht sehr einfach; dies hängt mitunter stark vom verwendeten Sensor und auch von der Umgebung ab. Typische Lidar-Sensoren oder auch andere Laserentfernungsmesser stellen die Menge an Punkten (Punktwolke) nicht nur mit den Punkten (die die ausgehend von und relativ zu dem mobilen Gerät bzw. dem Sensor bestimmt worden sind, und damit auch einen Abstand hierzu angeben) zur Verfügung, sondern können für jeden Punkt auch eine Intensität, insbesondere Lichtintensität angeben, d.h. einem Punkt ist jeweils eine Intensität, insbesondere eine Lichtintensität zugeordnet.

Da ein Marker oder Reflektormarker insbesondere dafür ausgelegt ist, eine hohe Reflexion zu gewährleisten, könnten einfach Punkte mit hoher Intensität (z.B. mit Intensität höher als ein bestimmter Schwellwert) als von einem Marker bzw. Reflektormarker stammend angesehen werden. Dies funktioniert jedoch nicht zuverlässig, wie sich gezeigt hat, da es auch viele andere Objekte in der Umgebung geben kann, die eine hohe Reflektivität aufweisen. Dies können z.B. Metallbereiche an Wänden oder anderen Gegenständen sein oder Reflektorstreifen auf Warnwesten oder Fahrzeugen. Selbst übliche Oberflächen an Wänden können, ggf. abhängig vom Auftreffwinkel des Lasers, hohe Reflektivität aufweisen.

Vor diesem Hintergrund wird vorgeschlagen, dass eine Menge von Punkten, wie vorstehend erwähnt, bereitgestellt wird, und dass dann basierend darauf eine Teilmenge an Punkten bestimmt wird, die einem oder mehreren in der Umgebung vorhandenen Markern zuzuordnen sind oder dass, hiermit gleichbedeutend, der eine oder die mehreren Marker bestimmt werden. Die einem Marker zuzuordnenden Punkte (bzw. ein Marker) werden dabei jeweils gemäß wenigstens einem Kriterium bestimmt, wobei das wenigstens eine Kriterium umfasst, dass einer oder mehrere Punkte mit einer Intensität, die höher als ein erster Schwellwert ist, innerhalb eines ersten vorgegebenen Bereichs liegen, und dass einer oder mehrere Punkte mit einer Intensität, die geringer als ein zweiter Schwellwert ist, innerhalb eines zweiten und/oder dritten vorgegebenen Bereichs liegen, wobei der zweite und/oder dritte vorgegebene Bereich an den ersten vorgegebenen Bereich (z.B. links und rechts) angrenzen. Der zweite Schwellwert ist hierbei zweckmäßigerweise gleich oder kleiner dem ersten Schwellwert. Der erste Bereich und der zweite und/oder dritte Bereich liegen insbesondere auch auf einer Linie oder liegen zumindest näherungsweise auf einer Linie. Basierend auf dem einen oder den mehreren Punkten mit einer Intensität, die höher als der erste Schwellwert ist, kann dann die Teilmenge bestimmt werden, insbesondere können diese Punkte die Teilmenge bilden. Zudem können basierend darauf dann der eine oder die mehreren Marker bestimmt werden.

Auf diese Weise kann durch gezieltes Anbringen und Wahl der Größe von Markern bzw. Reflektormarkern erreicht werden, dass diese in der Punktewolke später eindeutig identifizierbar sind. Ein Maß, insbesondere eine Länge, des ersten Bereichs kann also z.B. basierend auf einem Maß, insbesondere einer Länge (bzw. einer Breite, je nachdem wie dies definiert ist) von einen oder der mehreren Marker vorgegeben sein. So kann ein Marker z.B. 5 cm lang (bzw. breit - es kommt dabei auf das Maß in der Ebene, in der der Lidar-Sensor arbeitet, an) sein und es kann darauf geachtet werden, dass links und rechts vom Marker, wenn dieser an der Wand angebracht wird, jeweils mindestens z.B. 5cm frei von anderen Objekten sind.

Eine Grenze eines Markers, also z.B. dessen Anfang oder Ende, kann insbesondere bestimmt werden, indem ein größter Unterschied der Intensität oder ein Unterschied der Intensität, der größer als ein vorgegebenen dritter Schwellwert ist, zwischen benachbarten Punkten auf einer Linie bestimmt wird. Ein solche Intensitätssprung zeigt an, dass von einer einfachen Wand-Oberfläche zu einem Marker gewechselt wird.

Damit ist eine robuste Detektion der Marker bzw. Reflektormarker in realen Umgebungen unter Berücksichtigung verschiedener Störeinflüsse wie glatten Metalloberflächen, spekularen Reflexionen etc. möglich. Dazu können Marker bzw. Reflektormarker einer bekannten Länge bzw. Breite an einer Wand angebracht und ein Teil der nicht reflektierenden Wand genutzt werden, um die Erkennung der Marker robuster zu gestalten, wodurch wesentlich bessere Klassifikationsergebnisse erzielt werden als mit vergleichsweise simplen Schwellenwerten für die Intensität. An der Wand angebrachte Marker sind darüber hinaus praxistauglicher als z.B. runde Säulen, da sie fast überall angebracht werden können, ohne zusätzlichen Platz in Anspruch zu nehmen.

Basierend auf dem einen oder den mehreren bestimmten Markern bzw. der Teilmenge kann dann eine aktuelle Position und/oder Orientierung des mobilen Geräts in der Umgebung bestimmt werden.

Das vorgeschlagene Verfahren lässt sich zudem leicht auf verschiedene Lidar-Sensor-Modelle anpassen, indem z.B. die Parameter angepasst werden. Häufig genügt es, einen einzigen Intensitätsschwellenwert (wenn z.B. der erst und zweite Schwellwert gleich sind) passend zu wählen.

Wenngleich das vorgeschlagene Vorgehen an sich auch funktioniert, wenn nur Marker zur Bestimmung von Position und/oder Orientierung des mobilen Geräts in der Umgebung verwendet werden, so lässt sich dies besonders gut auch dann anwenden, wenn - wie schon erwähnt, auch das sog. "Scan Matching" verwendet wird.

In diesem Fall wird das vorgeschlagene Vorgehen z.B. nur dann verwendet, wenn auf Marker zurückgegriffen werden soll. In diesem Fall kann außerdem basierend auf der Menge von Punkten in der Umgebung, die ausgehend von und relativ zu dem mobilen Gerät bestimmt worden sind, auch das "Scan Matching" durchgeführt werden. Hier kann dann die Menge von Punkten (insbesondere auch ohne Rücksicht auf deren Intensität) mit einer Referenzmenge von Punkten in Übereinstimmung gebracht werden, um so die aktuelle Position und/oder Orientierung des mobilen Geräts in der Umgebung zu bestimmen. Eine solche Referenzmenge von Punkten wird im Zusammenhang mit der Bestimmung von Position und/oder Orientierung (Posenschätzung) oftmals auch als "lokale Karte" bezeichnet. Besonders zweckmäßig ist es jedoch, wenn für das "Scan Matching" zwei Mengen von Punkten verwendet werden, nämlich einerseits diejenigen Punkte, die nicht einem Marker zugeordnet sind (also mit Intensität nicht höher als der erste Schwellwert) und andererseits die übrigen Punkte der Menge. Es können also zwei Mengen parallel und/oder zugleich jeweils mit einer Referenzmenge gematcht werden.

Basierend auf der aktuellen Position und/oder Orientierung des mobilen Geräts kann dann - ganz allgemein - auch ein Bewegungspfad bestimmt werden, auf dem sich das mobile Gerät in der Umgebung bewegen soll. Hierzu können, basierend auf dem Bewegungspfad sowie der aktuellen Position und/oder Orientierung, Steuerungsinformationen zum Bewegen des mobilen Geräts bestimmt werden; die Steuerungsinformationen können dann bereitgestellt werden bzw. das mobile Gerät kann basierend auf den Steuerungsinformationen bewegt werden.

Die aktuelle Position und/oder Orientierung des mobilen Geräts in der Umgebung kann, insbesondere bei nicht automatisierten mobilen Geräten, z.B. auch zur Nachverfolgung ("Tracken") des mobilen Geräts verwendet werden. So kann z.B. bestimmt werden, wo sich ein Gabelstapler oder anderes mobiles Gerät gerade innerhalb einer Fabrikhalle befindet.

Eine erfindungsgemäße Recheneinheit, z.B. ein Steuergerät eines Roboters, umfasst einen Prozessor, der so konfiguriert ist, dass ein erfindungsgemäßes Verfahren ausführt.

Die Erfindung betrifft auch ein mobiles Gerät mit einer erfindungsgemäßen Recheneinheit. Vorzugsweise ist das mobile Gerät als sich zumindest teilweise automatisiert bewegendes Fahrzeug, insbesondere als Personenbeförderungsfahrzeug oder als Güterbeförderungsfahrzeug, oder als Roboter, ausgebildet.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

Figurenbeschreibung

Figur 1    zeigt schematisch ein mobiles Gerät in einer Umgebung, bei dem ein erfindungsgemäßes Verfahren durchführbar ist.

Figur 2    zeigt schematisch Referenzmengen von Punkten, wie sie bei einem erfindungsgemäßen Verfahren in einer bevorzugten Ausführungsform auftreten können.

Figur 3    zeigt schematisch Mengen von Punkten, wie sie bei einem erfindungsgemäßen Verfahren in einer bevorzugten Ausführungsform auftreten können.

Figur 4    zeigt schematisch einen Ablauf eines erfindungsgemäßen Verfahrens in einer bevorzugten Ausführungsform.

Figur 5    zeigt einen Marker an einer Wand und dessen Erkennen im Rahmen eines erfindungsgemäßen Verfahrens in einer bevorzugten Ausführungsform.

Detaillierte Beschreibung der Zeichnung

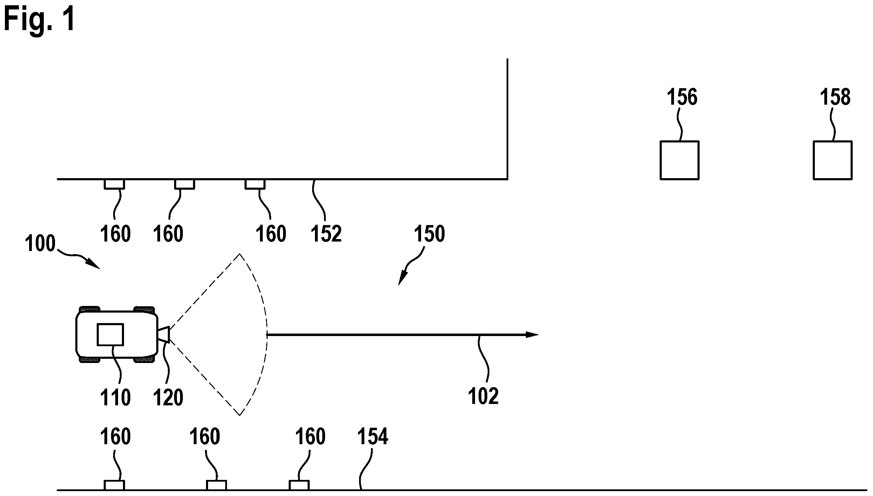

In Figur 1 ist schematisch ein mobiles Gerät 100 in einer Umgebung 150 dargestellt, bei dem ein erfindungsgemäßes Verfahren durchführbar ist. Bei dem mobilen Gerät 100 handelt es sich z.B. um einen Roboter oder ein automatisiert (bzw. autonom) fahrendes Fahrzeug, mit einer Recheneinheit 110 sowie einem Lidar-Sensor 120 zur Laserentfernungsmessung; ein Erfassungsbereich des Lidar-Sensors 120 ist beispielhaft gestrichelt angedeutet.

Bei der Umgebung 150 handelt es sich beispielhaft um das Innere eines Gebäudes mit einem z.B. längeren Flur, von links in der Figur 1 beginnend, mit Seitenwänden 152 und 154. Der Flur weitet sich, nach rechts in der Figur 1 hin, auf der Seite der Seitenwand 152 hin auf, es sind zwei Säulen 156 und 158 vorgesehen. An den Seitenwänden 152 und 154 sind beispielhaft jeweils drei Reflektormarker 160 vorgesehen.

Das mobile Gerät 100 soll sich nun z.B. entlang des Bewegungspfades 102 in der Umgebung 150 bewegen. Hierzu ist die Kenntnis der aktuellen Position und/oder Orientierung des mobilen Geräts 100 erforderlich, um bestimmen zu können, wie das mobile Gerät 100 angesteuert werden muss, um dem Bewegungspfad 102 folgen zu können, oder auch, um zunächst den Bewegungspfad 102 planen zu können. Wie erwähnt, kann die Kenntnis der aktuellen Position und/oder Orientierung auch (nur) der Nachverfolgung des mobilen Geräts dienen.

Hierzu kann mittels des Lidar-Sensors 120 die Umgebung 150 abgescannt werden. Dabei wird der Laserscanner im Lidar-Sensor bewegt, während mittels ausgesendeter Laserstrahlen und empfangener, reflektierter Strahlung eine Vielzahl an Punkten erhalten wird; jeder Punkt steht dabei für einen Punkt oder eine kleine Fläche in der Umgebung, dort z.B. an einem Objekt, von dem eine reflektierte Strahlung empfangen wird.

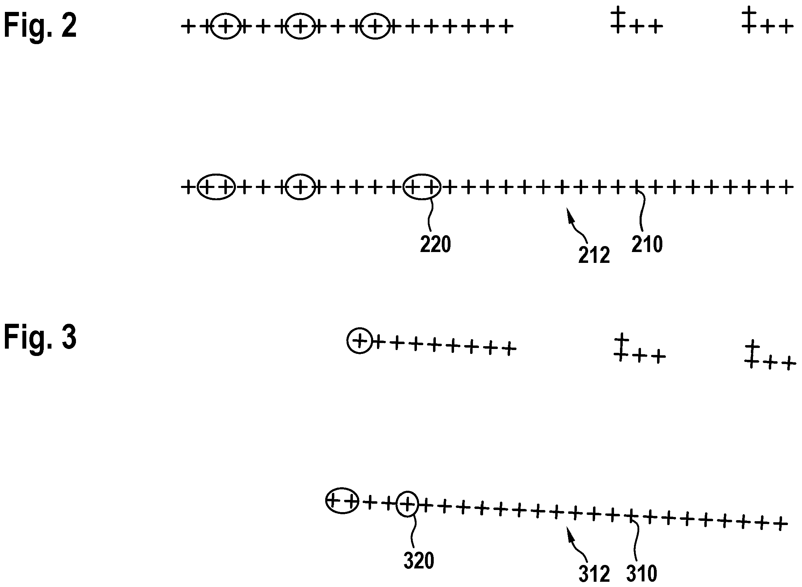

In Figur 2 sind hierzu für die Umgebung 150 aus Figur 1 beispielhaft eine Menge 212 von Punkten 210 (als Kreuze) dargestellt, wie sie mittels Laserentfernungsmessung grundsätzlich erhalten werden können. Dabei gibt es Punkte, die durch Reflexion der Laserstrahlen an z.B. den Seitenwänden 152, 154 sowie den Seitenflächen der Säulen 156, 158 entstehen bzw. erhalten werden. Außerdem gibt es Punkte, die durch Reflexion der Laserstrahlen an den Reflektormarkern 160 entstehen bzw. erhalten werden. Diese Punkte sind an sich wie die zuvor erwähnten Punkte, sie weisen jedoch in aller Regel eine (deutlich) höhere Intensität bzw. Lichtintensität auf, als Punkte, die durch Reflexion der Laserstrahlen an z.B. den Seitenwänden 152, 154 sowie den Seitenflächen der Säulen 156, 158 entstehen bzw. erhalten werden. Diese Punkte sind mit 220 bezeichnet (eingekreist). Dabei können je Reflektormarker 160 auch mehrere Punkte mit höherer Intensität vorhanden sein.

Diese beiden Arten von Punkten lassen sich unterscheiden, da die von den Reflektormarkern reflektierte Strahlung aufgrund der entsprechenden Ausbildung der Reflektormarker (z.B. als Spiegel) im Lidar-Sensor eine deutlich höhere Lichtintensität erzeugt als die von den übrigen Objekten in der Umgebung reflektierte Strahlung, wo die Laserstrahlung zumeist diffus gestreut wird. Wie schon erwähnt, können jedoch auch von anderen Objekten oder Gegenständen Laserstrahlen reflektiert werden, die eine höhere als übliche Intensität aufweisen, z.B. vergleichbar wie von den Reflektormarkern, und daher an sich von diesen nicht unterschieden werden können.

Die in Figur 2 gezeigten Punkte bilden zumindest im Wesentlichen die Umgebung 150 aus Figur 1 ab; es handelt sich um mehr Punkte als aus Sicht des mobilen Geräts 100 an der in Figur 1 gezeigten Position erfasst werden können. Diese Punkte können als Referenz oder Karte der Umgebung 150 dienen; diese kann z.B. über mehrere Erfassungszyklen hinweg erhalten worden sein.

In Figur 3 ist für die Umgebung 150 aus Figur 1 ebenfalls beispielhaft eine Menge 312 von Punkte 310 dargestellt, wie sie mittels Laserentfernungsmessung grundsätzlich erhalten werden können. Dabei gibt es Punkte, die durch Reflexion der Laserstrahlen an z.B. den Seitenwänden 152, 154 sowie den Seitenflächen der Säulen 156, 158 entstehen bzw. erhalten werden. Diese Punkte 310 sind mittels kleiner Kreuze dargestellt. Außerdem gibt es Punkte 320, die durch Reflexion der Laserstrahlen an den Reflektormarkern 160 entstehen bzw. erhalten werden (eingekreist); diese gehören somit insbesondere zu einer Teilmenge im Sinne der vorliegenden Erfindung.

Anders als in Figur 2, handelt es sich bei denen in Figur 3 gezeigten Punkte nur um diejenigen Punkte, die aus Sicht des mobilen Geräts 100 an der in Figur 1 gezeigten Position und auch in etwa der dort gezeigten Orientierung erfasst werden können. Diese Punkte können als aktuelle Punkte angesehen werden, wie sie an einer bestimmten Position mit bestimmter Orientierung des Geräts erfasst bzw. erhalten werden können.

Um nun die Position und Orientierung des mobilen Geräts in der Situation der Figur 3 zu bestimmen, kann z.B. die Menge 312 mit der Menge 212 zur Überlappung bzw. Übereinstimmung gebracht werden. Eine Transformation, die angewendet auf die Menge 312 die entsprechenden Punkte auf die Menge 212 abbildet, ergibt die Position und Orientierung des mobilen Geräts in der Situation der Figur 3 relativ zu der Situation in Figur 2; es handelt sich um ein sog. "Scan Matching".

Unabhängig von dem "Scan Matching" können jedoch die Marker bzw. Referenzmarker in den jeweiligen Scans, also basierend auf der Menge 212 oder 312 (dies funktioniert an sich gleichartig), bestimmt werden.

Die beiden Arten von Punkten (von Reflektormarker oder nicht von Reflektormarker) lassen sich theoretisch unterscheiden, da die von den Reflektormarkern reflektierte Strahlung aufgrund der entsprechenden Ausbildung der Reflektormarker (z.B. als Spiegel) im Lidar-Sensor eine deutlich höhere Lichtintensität erzeugt als die von den übrigen Objekten in der Umgebung reflektierte Strahlung, wo die Laserstrahlung zumeist diffus gestreut wird. Wie schon erwähnt, können jedoch auch von anderen Objekten oder Gegenständen Laserstrahlen reflektiert werden, die eine höhere als übliche Intensität aufweisen, z.B. vergleichbar wie von den Reflektormarkern, und daher an sich von diesen nicht unterschieden werden können.

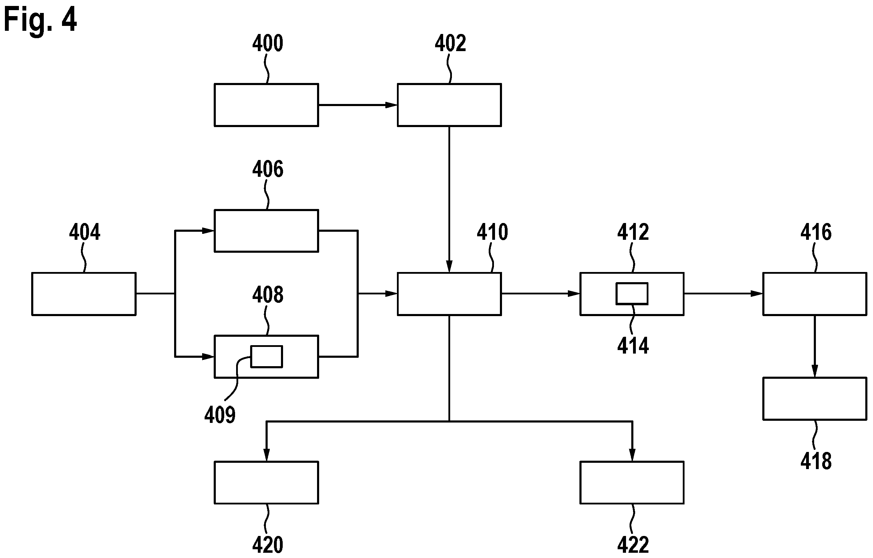

In Figur 4 ist nun ein erfindungsgemäßes Verfahren in einer bevorzugten Ausführungsform anhand eines Ablaufdiagramms schematisch dargestellt. In einem neuen Messzyklus können vorzugsweise zunächst, in einem Schritt 400, Informationen z.B. aus Odometrie und/oder Inertialsensoren erhalten bzw. erfasst werden, die es erlauben, in einem Schritt 402, die aktuelle Position und/oder Orientierung (zumindest grob) zu schätzen. Dies ist z.B. möglich, da mittels Odometrie bestimmt werden kann, wie viel sich die Position relativ zur letzten bekannten Position geändert hat; mittels Inertialsensoren kann dies für die Orientierung bestimmt werden. Wenn solche Informationen nicht vorhanden sind oder nicht verwendet werden können oder sollen, kann die aktuelle Position und/oder Orientierung aber z.B. auch anhand von Erfahrungswerten geschätzt werden. Diese geschätzte aktuelle Position und/oder Orientierung kann dann für das nachfolgende "Scan Matching"-Verfahren verwendet werden. Ebenso kann aber die zuletzt bekannte Position und/oder Orientierung für das nachfolgende "Scan Matching"-Verfahren verwendet werden.

Weiterhin wird in einem Schritt 404 ein Scan mittels des Lidar-Sensors durchgeführt, d.h. es wird eine Menge von Punkten bereitgestellt. Dabei wird z.B. die Menge von Punkten 312, wie in Figur 3 zusehen, erhalten. Dann kann, in Schritt 406, davon eine erste Menge von Punkten erster Art bestimmt werden, die nicht von Reflektormarkern stammen. In Schritt 408 kann von der Menge 312 eine zweite Menge mit einem oder mehreren Punkten zweiter Art bestimmt werden, die von Reflektormarkern stammen - mit anderen Worten werden also die Reflektormarker bzw. diejenige Teilmenge 409 (entspricht der zweiten Menge) von Punkten bestimmt, die einem Markern zuordenbar sind bzw. von einem Marker stammen. Beispielsweise kann die erste Menge der Menge abzüglich der zweiten Menge entsprechen.

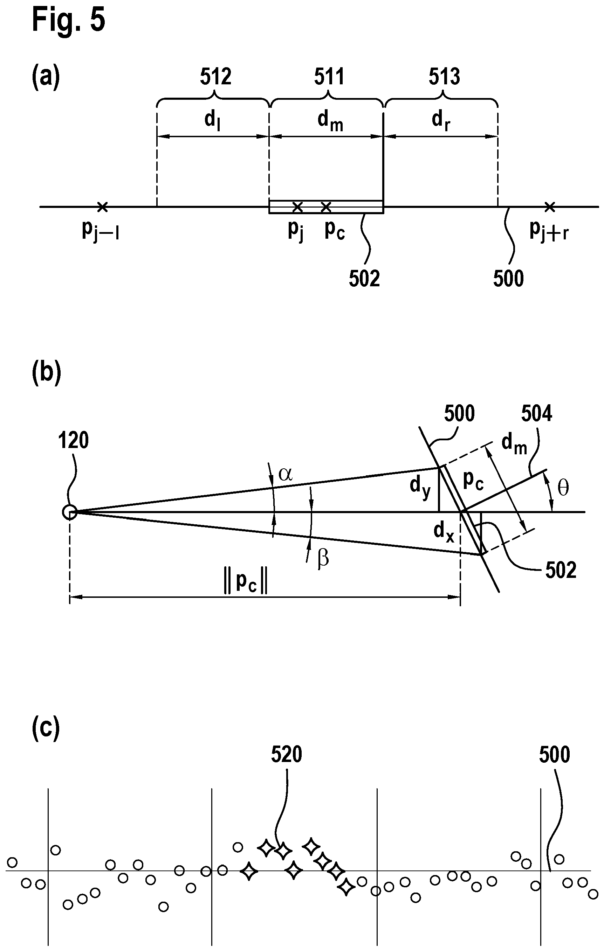

Eine Möglichkeit, wie bestimmt werden kann, ob ein Punkt von einem Reflektormarker stammt oder nicht - also das Bestimmen von Reflektormarkern bzw. der Teilmenge 409 basierend auf der Menge 312 von Punkten, soll nachfolgend in Bezug auf Figur 5 näher erläutert werden.

Es kann dann, in Schritt 410, ein "Scan Matching"-Verfahren angewendet. Hierbei wird auf die geschätzte oder ggf. zuletzt bekannte Position und/oder Orientierung zurückgegriffen. Wie schon erwähnt, gibt es verschiedene sogenannte "Scan Matching"-Verfahren (oder auch Verfahren zur Registrierung von Punktwolken), von denen die meisten entweder auf dem "Iterative Closest Point"-Verfahren (ICP) oder dem "Normal Distributions Transform"-Verfahren (NDT) basieren. Nachfolgend soll das NDT-Verfahren zum "Scan Matching" als Beispiel näher erläutert werden.

Zunächst soll kurz die Funktionsweise eines "Scan Matching"-Verfahrens an sich erläutert werden. Als Eingabe eines "Scan Matching"-Verfahrens (dies gilt im Grunde für alle "Scan Matching"-Verfahren) sind eine aktuelle Menge an Punkten bzw. eine Punktwolke, eine Referenzmenge an Punkten bzw. eine Referenzpunktwolke, und eine initiale Schätzung der Position und/oder Orientierung der aktuellen Punktwolke relativ zur Referenzpunktwolke (oder eben ggf. die zuletzt bekannte) nötig.

Das NDT-"Scan Matching"-Verfahren überführt z.B. in einem ersten Schritt die Referenzpunktwolke in eine sog. NDT-Darstellung. Dabei handelt es sich um ein diskretisiertes Raster von Zellen (NDT-Zellen), die jeweils entweder leer sind oder die in ihnen enthaltenen Punkte durch eine multivariate Normalverteilung mit Mittelwert und Kovarianzmatrix approximieren. Um Diskretisierungseffekte zu vermeiden ist es zweckmäßig, mehrere überlappende Raster zu verwenden.

In einem zweiten Schritt werden alle Punkte der aktuellen Punktwolke basierend auf der aktuellen bzw. initialen Schätzung der Position und/oder Orientierung (Posenschätzung) in Referenzkoordinaten transformiert und mit der nächsten NDT-Zelle bzw. deren Mittelwert und Kovarianzmatrix assoziiert. In einem dritten Schritt wird diejenige relative Position und/oder Orientierung (Pose) ermittelt, die einen NDT-Score maximiert.

Der zweite und dritte Schritt werden in der Regel mehrfach wiederholt, da veränderte Posenschätzungen zu anderen Assoziationen zwischen Punkten und NDT-Zellen führen können. Diejenige relative Position und/oder Orientierung (Pose) die diesen NDT-Score maximiert, stellt dann die aktuelle Position und/oder Orientierung dar.

Das "Scan Matching"-Verfahren kann mit verschiedenen Mengen verschiedener Arten von Punkten erfolgen, also mit regulären Punkten, d.h. einer ersten Menge und einer ersten Referenzmenge mit Punkten erster Art, und mit Punkten resultierend von Reflektormarkern, d.h. einer zweiten Menge und einer zweiten Referenzmenge mit einem oder mehreren Punkten zweiter Art.

In einem Schritt 412 kann dann die aktuelle Position und/oder Orientierung (Pose) 414 bestimmt und ausgegeben werden. In einem Schritt 416 kann darauf basierend auch ein Bewegungspfad bestimmt werden, worauf basierend wiederum, in Schritt 418, Steuerungsinformationen zum Bewegen des mobilen Geräts bestimmt werden, um dieses zu bewegen.

Außerdem kann, in einem Schritt 420, zumindest ein Teil der Punkte der aktuellen ersten Menge zur ersten Referenzmenge hinzugefügt werden. In einem Schritt 422 kann der eine Punkt oder zumindest ein Teil der mehreren Punkte der aktuellen zweiten Menge zur zweiten Referenzmenge hinzugefügt werden.

In Figur 5 ist ein Marker an einer Wand und dessen Erkennen im Rahmen eines erfindungsgemäßen Verfahrens in einer bevorzugten Ausführungsform gezeigt. In Ansicht (a) ist hierzu eine Wand 500 mit einem darauf angebrachten Marker bzw. Reflektormarker 502 zu sehen. Zudem sind beispielhaft drei Punkte $p_{j-l}$, $p_j$ und $p_{j+r}$ zu sehen, die z.B. mittels Lidar erfasst sind. Mit $d_m$, $d_l$ und $d_r$ sind Breiten bzw. Längen eines ersten, zweiten und dritten Bereichs 511, 512, 513 gezeigt. In Ansicht (b) sind neben der Wand 500 und dem Marker 502 der Lidar-Sensor 120 (vgl. auch Figur 1) bzw. dessen Position gezeigt, sowie Winkel, mit denen die betreffenden Punkte erfasst werden können. In Ansicht (c) sind neben der Wand 500 Punkte 520 mit hoher Intensität (als Kreuze) sowie Punkte mit geringer Intensität (Kreise) gezeigt, wie sie von einem Lidar-Sensor erfasst werden können.

Um die Robustheit bei der Bestimmung der Marker zu erhöhen, können diese - wie erwähnt - mit einer bestimmten Länge bzw. Breite $d_m$ verwendet und angebracht werden. Diese Länge $d_m$ kann z.B. 5cm betragen. Links und rechts davon kann an der Wand jeweils ein Bereich $d_l$ bzw. $d_r$ von z.B. ebenfalls jeweils 5cm freibleiben bzw. mindestens vorhanden sein (d.h. der Marker sollte nicht direkt an einer Kante der Wand angebracht sein).

Wenn nun eine Menge an Punkten erhalten wird, kann zunächst jeder Punkt $p_j$ als potentiell einem Marker zugeordnet bzw. von einem solchen stammend betrachtet werden. Innerhalb eines Scans können mehrere Laserstrahlen dieselbe Markierung treffen, was dazu führt, dass mehrere Punkte eines Markers erfasst werden. Später können daher z.B. potenzielle doppelte Marker basierend auf ihrer euklidischen Distanz entfernt werden.

Generell soll nun die Intensität eines Punktes höher als ein erster Schwellwert $i_{min}$, sein, um überhaupt als potentiell von einem Marker stammend in Betracht gezogen zu werden. Dieser erste Schwellwert kann abhängig von Lidar-Sensor sein, da diese unterschiedlich starke Intensitäten der ausgesendeten Laserstrahlen und/oder Unterschiede bei der Erfassung aufweisen können.

Obwohl dies noch kein ausreichendes Kriterium ist, ermöglicht es bereits, einen großen Prozentsatz der potentiellen Punkte zu eliminieren, die von einem Marker stammen können. Außerdem können Punkte unberücksichtigt bleiben, die näher als $r_{min}$ am Lidar-Sensor liegen, da sie möglicherweise zum mobilen Gerät gehören (also von dort reflektierte Strahlung). Außerdem können Punkte unberücksichtigt bleiben, die weiter entfernt sind als $r_{max}$. Bei großen Entfernungen treffen zu wenige Lidar-Strahlen auf den Marker, was zu zu wenigen hochintensiven Punkten für eine zuverlässige Erkennung führt. Mit anderen Worten werden also nur Punkte berücksichtigt, die innerhalb eines Bereichs von $r_{min}$ bis $r_{max}$, relativ zum mobilen Gerät bzw. Sensor, liegen.

Dann kann ein Wandsegment ($p_{j-l}$ ... $p_j$ ... $p_{j+r}$) identifiziert werden, auf dem sich der Punkt befindet, indem benachbarte Punkte aus dem Laserscan der Menge (die dann aber keine Intensität höher als der erste Schwellwert haben) auf beiden Seiten hinzugefügt werden bzw. ebenfalls betrachtet werden, bis z.B. beobachtet wird, dass der

Euklidische Abstand von $p_j$ größer als eine gegebene Fenstergröße w ist. Das bedeutet auch, dass das Wandsegment bei einem Tiefensprung (z.B. Kante der Wand) automatisch stoppt. Um sicher zu gehen, dass das betrachtete Wandsegment groß genug ist, kann geprüft werden, ob dessen Länge $\|p_{j-l} - p_{j+r}\| \geq l_{min}$ ist und ob die Anzahl der Punkte $l+r+1 \geq p_{min}$ auf dem Wandsegment hinreichend ist.

Um die genauen Grenzen des Markers zu bestimmen, können die größten Intensitätsunterschiede innerhalb des Wandsegments betrachtet werden. Der größte Intensitätssprung nach oben kann als Anfang des Markers angenommen werden, und der größte Sprung nach unten kann als Ende des Markers angenommen werden. Sprünge werden z.B. dann als gültig betrachtet, wenn die Größe jedes Sprungs mindestens $c_{i,min}$ beträgt, wobei $c_{i,min}$ geeignet gewählt werden kann und i die Intensität ist (kann auch dem ersten Schwellwert entsprechen). Zudem kann verifiziert werden, dass der Anfang des Markers vor $p_j$ und das Ende nach $p_j$ liegt. Jetzt kann der Mittelpunkt $p_c$ des Markers bestimmt werden, der möglicherweise nicht genau identisch mit $p_j$ ist, indem die Massenschwerpunkte aller Punkte auf dem Marker berechnet werden. Alternativ könnte auch der Punkt mit der höchsten Intensität innerhalb des Markers als Mittelpunkt verwendet werden.

Dann kann z.B. eine Regression der kleinsten Quadrate verwendet werden, um eine Linie an die Punkte des Markers anzupassen. Um sicherzustellen, dass die Wand gerade ist, kann der mittlere quadratische Fehler der Regression unter einem Schwellenwert liegen. Basierend auf dieser Linie kann auch eine Normale 504 des potentiellen Markers bestimmt werden. Wenn Spiegelreflexionen in der gegebenen Umgebung ein Problem darstellen, können Marker, bei denen die Normale genau auf das Lidar zeigt, verworfen werden, da sie das Ergebnis von Spiegelreflexionen sein können. Dies kann jedoch auf Kosten des Fehlens gültiger Marker gehen, die zufälligerweise normal auf das Lidar zeigen. Auch Marker, die in einem flachen Winkel gesehen werden, können verworfen werden, da ihre Erkennung dazu neigt, unzuverlässig zu sein. Es können z.B. auch nur Punkte mit einem flachen Winkel von mehr als 80° oder einem anderen geeigneten Winkelwert verworfen werden. Basierend auf der Normalen 504 und der Entfernung des $p_c$ vom Lidar-Sensor 120 kann die erwartete Größe des Markers in Bezug auf die Punkte abgeleitet werden. Dazu kann der Winkelbereich $\alpha+\beta$ der Lidarstrahlen, die auf den Marker treffen, wie in Ansicht (b) dargestellt, berechnet werden. Dabei gilt:

$$dx=d_m/2\sin\theta, \quad dy=d_m/2\cos\theta, \quad \alpha=\text{atan2}(dy, \|p_c\| - dx), \quad \beta=\text{atan2}(dy, \|p_c\| + dx)$$

Unter Verwendung einer in der Regel bekannten Winkelauflösung des Lidar-Sensors kann dann berechnet werden, wie viele Punkte voraussichtlich auf einen Marker der Größe $d_m$ treffen, und dies mit der tatsächlichen Anzahl von Punkten auf dem Marker vergleichen. Wenn die absolute Differenz unter einem Schwellenwert $p_d$ liegt, kann davon ausgegangen, dass der Marker gültig ist, und er kann z.B. in eine Liste detektierter Marker hinzugefügt werden. In der Praxis konnte beobachtet werden, dass die Anzahl der auf einem Marker erkannten Punkte häufig zwei Punkte höher ist als vorhergesagt. Dies wird durch die Divergenz des Laserstrahls verursacht, was bedeutet, dass ein Strahl auf jeder Seite der Markierung immer noch teilweise auf die Markierung trifft. Daher können z.B. immer zwei zur erwarteten Punktzahl hinzugefügt werden.

Auf diese Weise können sehr genau Marker bestimmt werden. Wenn z.B. ausgehend von der Situation in Ansicht (c) die Punkte 520 mit hoher Intensität (höher als der erste Schwellwert) innerhalb des ersten Bereichs 511 gemäß Ansicht (a) liegen, und zumindest in den zweiten und/oder dritten Bereich 512, 513 ebenfalls Punkte, aber mit geringer Intensität (geringer als der zweite Schwellwert), kann von der sicheren Erkennung eines Markers ausgegangen werden, da das erkannte Muster der Punkte demjenigen entspricht, wie es von einem vorgegebenen Marker erwartet wird. Die so bestimmte Teilmenge kann dann später im Verfahren verwendet werden.

Es sei an dieser Stelle nochmals erwähnt, dass diese Art, Marker sicher zu erkennen, zwar im Rahmen des konkreten in Figur 4 gezeigten Ablaufs verwendet werden kann, grundsätzlich aber auch ohne das "Scan Matching" z.B. nur zur Bestimmung von Position und/oder Orientierung verwendet werden kann.

**Patentansprüche**

1. Verfahren zum Bestimmen von Markern für eine Position und/oder Orientierung eines mobilen Geräts (100) in einer Umgebung (150), in der sich das mobile Gerät (100) bewegt oder bewegen soll, umfassend:

   Bereitstellen (404) einer Menge (312) von Punkten (310) in der Umgebung, die ausgehend von und relativ zu dem mobilen Gerät (100) bestimmt worden sind, wobei den Punkten jeweils eine Intensität, insbesondere eine Lichtintensität zugeordnet ist; und
   Bestimmen (408), basierend auf der Menge (312) von Punkten (310), einer Teilmenge (409) von Punkten (320), die einem oder mehreren in der Umgebung vorhandenen Markern (160) zuordenbar ist,

wobei einem Marker (160) zuzuordnende Punkte jeweils gemäß wenigstens einem Kriterium bestimmt werden, wobei das wenigstens eine Kriterium umfasst, dass einer oder mehrere Punkte (520) mit einer Intensität, die höher als ein erster Schwellwert ist, innerhalb eines ersten vorgegebenen Bereichs (511) liegen, und dass einer oder mehrere Punkte mit einer Intensität, die geringer als ein zweiter Schwellwert ist, innerhalb eines zweiten und/oder dritten vorgegebenen Bereichs (512, 513) liegen, wobei der zweite und/oder dritte vorgegebene Bereich (512, 513) an den ersten vorgegebenen Bereich (511) angrenzen; und

wobei die Teilmenge (409) der Punkte (320), sowie insbesondere der einen oder die mehreren Marker, denen die Punkte der Teilmenge zugeordnet sind, basierend auf dem einen oder den mehreren Punkten mit einer Intensität, die höher als der erste Schwellwert ist, bestimmt werden.

2. Verfahren nach Anspruch 1, wobei der zweite Schwellwert gleich oder kleiner dem ersten Schwellwert ist, und/oder wobei der erste Bereich und der zweite und/oder dritte Bereich auf einer Linie liegen.

3. Verfahren nach Anspruch 1 oder 2, wobei eine Grenze eines Markers (160) bestimmt wird, indem ein größter Unterschied der Intensität oder ein Unterschied der Intensität, der größer als ein vorgegebenen dritter Schwellwert ist, zwischen benachbarten Punkten auf einer Linie bestimmt wird.

4. Verfahren nach einem der vorstehenden Ansprüche, wobei ein Maß, insbesondere eine Länge, des ersten Bereichs basierend auf einem Maß, insbesondere einer Länge des einen oder der mehreren Marker (160) vorgegeben sind.

5. Verfahren nach einem der vorstehenden Ansprüche, wobei für das Bestimmen der Teilmenge nur Punkte der Menge berücksichtigt werden, die innerhalb eines vorgegebenen Abstandsbereichs, relativ zu dem mobilen Gerät (100), liegen.

6. Verfahren nach einem der vorstehenden Ansprüche, wobei die Punkte (310) mittels Entfernungsmessung, insbesondere mittels eines Lidar-Sensors (120) des mobilen Geräts (100), bestimmt werden oder worden sind.

7. Verfahren nach einem der vorstehenden Ansprüche, wobei die Punkte (310) in einer Ebene liegend bestimmt werden oder worden sind.

8. Verfahren nach einem der vorstehenden Ansprüche, wobei der eine oder die mehreren Marker einem oder mehreren vordefinierten Markern (160), insbesondere Reflektormarkern, in der Umgebung entsprechen.

9. Verfahren nach einem der vorstehenden Ansprüche, weiterhin umfassend:
Bestimmen (416) eines Bewegungspfads (102), auf dem sich das mobile Gerät (100) in der Umgebung (150) bewegen soll, basierend auf der aktuellen Position und/oder Orientierung (414) mobilen Geräts.

10. Verfahren nach Anspruch 9, weiterhin umfassend:

Bestimmen (416) eines Bewegungspfads (102), auf dem sich das mobile Gerät (100) in der Umgebung (150) bewegen soll, basierend auf der aktuellen Position und/oder Orientierung (414) mobilen Geräts, und insbesondere Bestimmen, basierend auf dem Bewegungspfad (102) und der aktuellen Position und/oder Orientierung (414), von Steuerungsinformationen zum Bewegen des mobilen Geräts (100), und Bereitstellen der Steuerungsinformationen und/oder Bewegen des mobilen Geräts (100) basierend auf den Steuerungsinformationen.

11. Recheneinheit (110) umfassend einen Prozessor, der so konfiguriert ist, dass er das Verfahren nach einem der vorstehenden Ansprüche ausführt.

12. Mobiles Gerät (100) mit einer Recheneinheit (110) nach Anspruch 10.

13. Mobiles Gerät (100) nach Anspruch 12 das als sich zumindest teilweise automatisiert bewegendes Fahrzeug, insbesondere als Personenbeförderungsfahrzeug oder als Güterbeförderungsfahrzeug, oder als Roboter, ausgebildet ist.

14. Computerprogramm umfassend Befehle, die bei der Ausführung des Programms durch einen Computer diesen veranlassen, das Verfahren nach Anspruch 1 bis 10 auszuführen.

**15.** Computerlesbarer Datenträger, auf dem das Computerprogramm nach Anspruch 14 gespeichert ist.

# Fig. 1

Fig. 2

+ ⊕ + + ⊕ + + ⊕ + + + + + +     ‡ + +     ‡ + +

+ ⟨+ +⟩ + + ⟨+⟩ + + + + ⟨+ +⟩ + + + + + + + + + + + + + + + + + + +

220         212   210

Fig. 3

⊕ + + + + + + +     ‡ + +     ‡ + +

⟨+ +⟩ + + ⟨+⟩ + + + + + + + + + + + + + + + + + + + +

320         312   310

EP 4 357 808 A1

Fig. 4

# Fig. 5

(a)

(b)

(c)

Europäisches Patentamt
European Patent Office
Office européen des brevets

# EUROPÄISCHER RECHERCHENBERICHT

Nummer der Anmeldung

EP 23 20 2003

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2021/011135 A1 (LEE YU-CHEOL [KR] ET AL) 14. Januar 2021 (2021-01-14) | 1,2,4-15 | INV. G01S7/48 |
| Y | * Absatz [0003] * | 3 | G01S17/42 |
| | * Absatz [0047] – Absatz [0050] * | | G01S17/66 |
| | * Absatz [0054] – Absatz [0056] * | | G01S17/89 |
| | * Absatz [0061] – Absatz [0063] * | | G01S17/931 |
| | * Absatz [0111] – Absatz [0120] * | | |
| | * Absatz [0125] – Absatz [0127] * | | |
| | * Abbildungen 1-7 * | | |
| | ----- | | |
| Y | YANG RONGHAO ET AL: "Accurate Road Marking Detection from Noisy Point Clouds Acquired by Low-Cost Mobile LiDAR Systems", ISPRS INTERNATIONAL JOURNAL OF GEO-INFORMATION, Bd. 9, Nr. 10, 1. Oktober 2020 (2020-10-01), Seite 608, XP093133491, ISSN: 2220-9964, DOI: 10.3390/ijgi9100608 | 3 | |
| A | * Seite 6, Zeile 3 – Zeile 37 * | 1,2,4-15 | RECHERCHIERTE SACHGEBIETE (IPC) |
| | * Abbildungen 1-8 * | | G01S |
| | ----- | | |

Der vorliegende Recherchenbericht wurde für alle Patentansprüche erstellt

| Recherchenort | Abschlußdatum der Recherche | Prüfer |
|---|---|---|
| München | 21. Februar 2024 | Köppe, Maro |

EPO FORM 1503 03.82 (P04C03)

**EP 4 357 808 A1**

## ANHANG ZUM EUROPÄISCHEN RECHERCHENBERICHT
## ÜBER DIE EUROPÄISCHE PATENTANMELDUNG NR.

EP 23 20 2003

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-02-2024

| Im Recherchenbericht angeführtes Patentdokument | Datum der Veröffentlichung | Mitglied(er) der Patentfamilie | Datum der Veröffentlichung |
|---|---|---|---|
| US 2021011135 A1 | 14-01-2021 | KEINE | |

Für nähere Einzelheiten zu diesem Anhang : siehe Amtsblatt des Europäischen Patentamts, Nr.12/82

EPO FORM P0461